# EUROPEAN PATENT APPLICATION

(11) **EP 0 901 757 A1**
(43) Date of publication of application: **17.03.1999**
(21) Application number: 97115904.1
(22) Date of filing: 12.09.1997
(51) Int. Cl.: A23L 2/00, A23L 2/76, A23L 2/10

(54) **Melon juice**

(71) Applicant: THE PROCTER & GAMBLE COMPANY, Cincinnati, Ohio 45202 (US)
(72) Inventor: Borlinghaus, Axel Horst, 55234 Bechtolsheim (DE); Wessing, Marion Käthe, 65830 Kriftel (DE); Fischer, Christa Maria, 65760 Eschborn (DE)
(74) Representative: Hirsch, Uwe Thomas

(57) **Abstract**

The present invention relates to a melon juice concentrate which is useful as a component in melon juice comprising beverages. Typically such beverage comprise an organoleptically objectionable cucumber flavour which is imported with the melon juice concentrate. In contrast the melon juice concentrate according to the present invention is free of organoleptically objectionable cucumber flavours. The present invention also relates to a process for providing the melon juice concentrate and a beverage comprising the melon juice concentrate.

The melon juice concentrate being provided by the following process steps in the indicated order
- providing a liquid melon extract slurry;
- adjusting said liquid melon extract slurry to a pH of 4 or less;
- treating said pH adjusted melon slurry with a pectinase enzyme;
- clarifying said enzyme treated slurry by filtration to have at least a clarity of 95% at 630 nano meters wave length of light to provide a clear liquid;
- concentrating said clear liquid by heating to remove water and to remove aroma components to a level without detectable organoleptically objectionable cucumber flavour to provide said melon juice concentrate;
wherein all process steps are carried out such that the oxygen content in the liquid phase of said liquid melon extract slurry, said clear liquid and said melon juice concentrate is maintained below 4 ppm.

## Description

### Field of the invention

The present invention relates to a melon juice concentrate which is useful as a component in melon juice comprising beverages. Typically such beverage comprise an organoleptically objectionable cucumber flavour which is imported with the melon juice concentrate. In contrast the melon juice concentrate according to the present invention is free of organoleptically objectionable cucumber flavours. The present invention also relates to a process for providing the melon juice concentrate and a beverage comprising the melon juice concentrate.

### Background of the invention

The use of melon as a source for fruit juices which are used alone or in combination with other juices in beverages is known. A typical problem of such compositions is however that the melon juice component typically generates a cucumber flavour which is not acceptable to many potential consumers of juice comprising beverages. Therefore the inclusion of melon juice has not found commercial application other than in fruit juices having either an exceptionally low quantity of melon juice or comprising a large variety of other flavours which could mask the melon juice component.

It is therefore an objective of the present invention to provide a melon juice concentrate which is free of or at least low enough in organoleptically objectionable cucumber flavours that when the melon concentrate is added to a fruit juice comprising beverage it does not cause the beverage to have a organoleptically recognisable cucumber taste or flavour. It is another objective of the present invention to devise a process for providing such a melon juice concentrate by use of conventionally available and therefore relatively inexpensive process steps and equipment requirements.

### Summary of the invention

The present invention relates to a melon juice concentrate which is usable as a component in beverages which beverages are free of organoleptically objectionable cucumber flavours when the melon juice concentrate is used in the beverage in a quantity which provides the beverage with a melon detectable flavour. The melon juice concentrate is prepared by use of the following process steps in the indicated order
- providing a liquid melon extract slurry,
- adjusting the slurry to a pH of 4 or less,
- treating the pH adjusted slurry with a pectinase enzyme,
- clarifying the enzyme treated slurry by filtration in order to provide a clear liquid, the filtration being such as to provide clarity of 95% at 630 nano meters wave length of light,
- concentrating the cleared liquid by heating, and
- keeping the aroma components, vaporised during the concentration step, separated from the resulting melon juice concentrate.

Importantly, according to the present invention, all process steps to prepare the melon juice concentrate are carried out such that the oxygen content in the liquid phase at any process step is maintained below 4 ppm.

The liquid melon extract slurry can be provided by usual processing of melons namely by taking ripe melon fruits, washing the fruits, extracting the fruit mark from the fruits, finishing the fruit extract and centrifugation. Preferably the process to provide the melon juice concentrate includes a pasteurization step after the end of the pectinase enzyme treatment. According to the present invention citric acid is the preferred means to provide the pH adjustment.

In a preferred embodiment of the present invention the oxygen content can be kept below 4 ppm by either injection of nitrogen into all equipment which is open to the environment and thereby working under a nitrogen blanket which excludes the uptake of oxygen. Alternatively, it is possible to use equipment which is filled from the bottom, so-called bottom fill equipment, and which therefore is not exposed to any surface agitation in which oxygen could dissolve.

In a particularly preferred embodiment according to the present invention the melon juice concentrate is substantially free (organoleptically non detectable on a single strength basis) of 2,6 - Nonadienal and (E, Z) - 2,6 Nonadienal. This ensures that a beverage comprising between 1 - 10% of single strength melon juice (derived from the melon juice concentrate) does not have an organoleptically detectable cucumber flavour.

### Detailed description of the Invention

### Definitions

As used herein the term "beverage" refers to a beverage compositions which is in a single-strength, ready-to serve, drinkable form. Beverages of the present invention typically comprise at least 80 % water. Beverages include both carbonated and noncarbonated forms.

As used herein, the term "beverage concentrate" refers to a beverage composition in liquid form usable to prepare a single strength beverage. Beverage concentrates within the scope of the present invention typically comprise from 30 % to 70 %, preferably from 40 % to 60 %, water. They are usually formulated to provide, drinkable beverages when diluted with 2 to 5 parts by weight water.

As used herein mineral amounts are referred to as the supplemented amounts. Naturally contained minerals are not included when referring to mineral amounts.

As used herein the term single strength refers to the ready-to-serve concentration of beverage compounds.

As used herein the term "fruit juice" refers to citrus juices, non citrus juices such as apple juice, grape juice, pear juice, cherry juice, berry juice, pineapple juice, kiwi juice, cashew juice, peach juice, apricot juice, plum juice, prune juice, passion fruit juice, banana juice, melon juice, and mixtures of these juices.

As used herein, the term "citrus juice" refers to fruit juices selected from orange juice, lemon juice, lime juice, grapefruit juice, tangerine juice and mixtures thereof. All amounts of fruit juice referred to herein are on the basis of 100 % fruit juice in its single strength concentration.

As used herein, the term "comprising" means various components can be conjointly employed in a beverage and beverage concentrate of the present invention. Accordingly the term "comprising" encompasses the more restrictive term "consisting of".

As used herein percentages are given as percent by weight of the beverage in its single strength dilution unless indicated otherwise. Percentages of water include the amount of water inherent in fruit juices.

### Melon juice concentrates

The melon juice concentrate contemplated by the present invention is such that upon aqueous dilution to its single strength form it is like freshly prepared melon juice without objectionable cucumber flavour. The melon juice concentrate contemplated by the present invention excludes those concentrates which cannot be reconstituted to the single strength melon juice due to solubility problems. This defines the highest possible concentrate included in the present invention for melon juice compositions.

It is of course also possible not to dilute the melon juice concentrate to its single strength form but combine it with other ingredients especially other fruit juices, in order to prepare a melon juice comprising beverage. In this respect the melon juice concentrate will always be diluted effectively to a single strength or less than single strength concentration prior to consumption.

A problem with melon juice from concentrate is that melon juice develops quickly a objectionable cucumber type flavour. This flavour essentially derives from the presence of 2,6 - nonadienal and/or (E, Z) - 2,6 - nonadienal. Therefore, a melon juice or melon juice concentrate which is treated to reduce these compounds or to prevent formation of these compounds is more acceptable in a single strength beverage comprising melon juice.

In order to obtain a melon juice concentrate which is free of such organilaptically objectionable flavours it has been found that following a concentration process comprising the following steps, in the indicated order, will have the desired result.

First a melon extract slurry is prepared by extracting it from ripe melon fruits. Melon fruits according to the present invention belong the cucurbitaceae family and are known as sugar melon, known as Cucumis melo, Cucurbitaceae, such as Yellow and White Honeydew, Tendral, Galia, Charentis, Vavaillon, Bellegarde, Hales Best, Ha on, Ma ja, Ogen, Goldking, Sweethart, Tamaris, Rochet, Futuro, Piel de Sapo, Wiga, Marina, or water melon known as Citrulluslanatus, Cucurbitaceae. For the slurry the fruits should be washed first and then the fruit mark should be extracted from the fruit. This is done by any usual way well-known in the art of fruit extraction. After this the fruit extract is finished which is done by eliminating all larger solid particles, e.g. by a size reduction process such as a high shear process after eliminating the melon seeds. After finishing the melon extract it is subjected to centrifugation to reduce the solid particle content by sedimentation and removal of the sediment.

Melon juice has a fairly high pH-value and according to the present invention it is necessary to adjust the melon extract slurry to a pH of 4 or less. This can be achieved by addition of any of the usual fruit grade acids well-known in the art but is preferably done by the addition of the appropriate amount of citric acid, malic acid or hydrochloric acid even though hydrochloric acid is not preferred.

After adjusting the melon extract slurry to the desired pH it is subjected to an enzyme treatment with pectinase which splits or cracks the organic chains in the extract and thereby further reduces the solid particle fraction of the slurry. Finally the enzyme treatment has to last until the majority of of the slurry. Finally the enzyme treatment has to last until the majority of melon pulp material has been consumed. Pectinase enzyme treatment is also supported by the pH reduction since the pectinase enzyme performs better in an acitic environment than at a neutral pH setting.

After the enzyme treatment the slurry is subjected to filtration to reach a clarity of 95 % at 630 nano meters wave length of light which provides a visually clear liquid. The clarification is well-known in the art and done with most juices which are provided as clear beverages, notably apple juice.

After these steps the clear melon juice extract is subjected to concentration by heating to remove some of the water content. In this concentrating step also aroma components are vaporised and usually separated from the water with which they vaporise. These aroma components are not added back to the composition since they include some, but not all, of the cucumber flavours. After cooling, the resulting liquid is the desired melon juice concentrate free of organoleptically objectionable cucumber flavours.

All of the above process steps per se are well-known processing steps in the art. However, the use of these process steps allows to produce a melon juice concentrate according to the present invention without the objectionable cucumber flavours provided the oxygen content in the liquid phase is kept at all times during the processing below 4 ppm. Only the combination of the above process steps and this condition to prevent oxidisation can create the desired melon juice concentrate.

To maintain the oxygen level below the critical 4 ppm range any of the common methods known in the art can be used. For example it is possible to process the melon juice from begin to the end under a blanket of nitrogen preventing oxygen to enter the liquid phase. In an alternative way it is also possible to use equipment which is operated by filling it from the bottom up. This prevents the turbulence usual when filling from above into a holding tank causing air and oxygen to be introduced.

### Use of the present invention

Rarely is a melon juice consumed as such. It is more typical that beverage compositions are created comprising melon juice. Melon juice is particularly known for its fruity and refreshing flavour but has not found widespread use due to the presence of the aforementioned objectionable cucumber flavours. With the present invention it is now possible to prepare melon juice concentrates. Juice concentrates which can be employed in formulating beverages comprising melon juice without organoleptically objectionable cucumber flavours. In the following some general beverage compositions well-known in the art are mentioned which particularly benefit from the combination with melon juice without the cucumber flavours.

Beverages contemplated in the context of the present invention can comprise a flavour composition which comprises a flavour selected from fruit flavours, botanical flavours and mixtures thereof.

As used herein, the term "fruit flavour" refers to those flavour derived from the reproductive part of a seed plant, especially one having a sweet pulp associated with the seed. Also included but less preferred within the term "fruit flavour" are synthetically prepared flavours made to simulate fruit flavours derived from natural sources. Particularly preferred fruit flavours are the citrus flavours including orange flavours, lemon flavours, a variety of other fruit flavours can be used such as apple flavours, grape flavours, cherry flavours, pineapple flavours and the like. These fruit flavours can be derived from natural sources such as fruit juices and flavour oils, or else synthetically prepared.

As used herein, the term "botanical flavour" refers to flavours derived from parts of a plant or other than the fruit. As such, botanical flavours can include those flavours from nuts, bark, roots and leaves, including tea leaves. Also included within the term "botanical flavour" are synthetically prepared flavours made to simulate botanical flavours derived from natural sources. Examples of such flavours include cola flavours, tea flavours and the like. These botanical flavours can be derived from natural sources such as essential oils and extracts, or else can be synthetically prepared.

The flavour component can comprise a blend of various flavours e.g. lemon and lime flavours, cola flavours with citrus flavours to form cola flavours etc. If desired, fruit juices or their concentrates such as orange juice, lemon juice, lime juice, apple juice, grape juice and the like can be used in the flavour composition.

The flavour in the flavour composition is sometimes formed into emulsion droplets which are then dispersed in the final beverage. Because these droplets usually have a specific gravity less than that of water and would therefore form a separate phase in the final beverage, weighting agents (which can also act as clouding agents) are typically used to keep the emulsion droplets dispersed in the beverage. Examples of such weighting agents are brominated vegetable oils and resin esters, in particular the ester gums. See L.F. Green, Developments in Soft Drinks Technology, Vol. 1 (Applied Science Publishers Ltd. 1978) pp. 87-93 for a further description of the use of weighting and clouding agents in liquid beverages. Besides weighting agents, emulsifiers and emulsion stabilisers can be used to stabilise the emulsion droplets. Examples of such emulsifiers and emulsion stabilisers include the gums, pectins, celluloses, polysorbates, sorbitan esters and propylene glycol alginates. See L.F. Green, supra at p. 92.

The particular amount of the flavour composition effective for imparting flavour characteristics to a beverage can depend upon the flavour(s) selected, the flavour impression desired, and the form of the flavour composition. For flavour compositions which are substantially free of fruit juice (i.e. on a single strength basis comprising no more than about 1% fruit juice by weight of the beverage) the flavour composition can be comprised in the beverage at an amount of at least 0.01% by weight of the beverage and typically from 0.05% to 1% by weight of the beverage. If fruit juice or concentrates thereof are part of the flavour composition up to twice these amounts can be used.

Beverages contemplated according to the present invention may also be carbonated. Usually a beverage will be considered to be carbonated if it comprises more than 30%, preferably more than 100% by volume of the beverage of solubilized carbon dioxide. Carbonated beverages comprise typically form 100% to 450%, preferably from 200% to 350% carbondioxide by volume of the beverage.

The carbonated beverage can be placed in a container such as a bottle or a can which is then sealed. See L.F. Green, Developments in Soft Drinks Technology, Vol. 1 (Applied Science Publishers Ltd. 1978), pp. 102-107, for a further description of beverage making in particular the process for carbonation.

Next to water the key compounds in a beverage composition considered in the context of the present invention are fruit juice compounds or its concentrate/puree and sweetener compounds. The melon juice concentrate according to the present invention is one of the fruit compounds included in a beverage. Due to the absence of objectionable cucumber off flavours it does not impart the negative flavour of cucumber into a fruit juice comprising beverage but only supplements the beverage with the highly preferable organoleptic characteristics of melon juice such as fruitiness, a perception of refreshment, and in particular if sugar melon juice or honey dew melon juice are used the perception of a natural sweetener even if artificial sweeteners are employed at the same time.

The amount of addition of melon juice concentrate to beverages can range from as low as 1 %, up to 30 % by weight on a single strength basis. In these amounts conventional melon juice from concentrates will typically cause the organoleptically objectionable cucumber flavours to be recognisable by people having average taste experience. Hence the use of the melon juice concentrate according to the present invention will substantially improve such beverages and has been found to cause no objectionable cucumber flavours even when considered by expert tasters.

The fruit juice content in the beverage composition will provide a certain sweetener effect due to its sugar content. This can be supplemented by additional sugar and/or other sweeteners. Other sweeteners are in particular those non-nutritive sweeteners which can be either natural or synthetic and usually have a much greater sweetness intensity than sugar but without its caloric value. Examples of such non-nutritive sweeteners are saccharin, cyclamate and Aspartame (TM) also known as Nutra-Sweet (TM) as well as other non-caloric sweeteners known in the art.

The sweetener composition provides together with the sweeteners already present in the flavour composition a maximum amount of solubilized sugar in the single strength beverage of 14%, preferably a maximum 12% by weight. It is, however, more typical to have substantially lower amounts of sugar and supplement the sweetness by the above mentioned non-nutritive sweeteners to provide sweetness comparable to about 5%-15% by weight of sugar.

Optionally the beverages can comprise edible acids which include phosphoric acid, fumaric acid, adipic acid, lactic acid, tartaric acid, gluconic acid, succinic acid, malic acid, citric acid or their respective sour salts. Also optionally the beverages can comprise supplemented solubilized minerals which include iron, calcium, magnesium, potassium, sodium, as well as supplemented vitamins.

## Claims

1. A melon juice concentrate usable as a component in beverages which are free of organoleptically objectionable cucumber flavours, said melon juice concentrate being provided by the following process steps in the indicated order
- providing a liquid melon extract slurry;
- adjusting said liquid melon extract slurry to a pH of 4 or less;
- treating said pH adjusted melon slurry with a pectinase enzyme;
- clarifying said enzyme treated slurry by filtration to have at least a clarity of 95 % at 630 nano meters wave length of light to provide a clear liquid;
- concentrating said clear liquid by heating to remove water and to remove aroma components to a level without detectable organoleptically objectionable cucumber flavour to provide said melon juice concentrate;
wherein all process steps are carried out such that the oxygen content in the liquid phase of said liquid melon extract slurry, said clear liquid and said melon juice concentrate is maintained below 4 ppm.

2. A concentrate according to claim 1 wherein said liquid melon extract slurry is provided by
- providing ripe melon fruits
- washing said fruits
- extracting the fruit mark from said fruits
- finishing said fruit extract
- centrifugation of said finished fruit extract.

3. A concentrate according to claim 1 or 2 wherein said enzyme treated slurry is subjected to pasteurisation prior to said clarification step.

4. A concentrate according to any of the preceding claims wherein said pH adjustment step is provided by adding the appropriate amount of citric acid.

5. A concentrate according to any of the preceding claims wherein said oxygen content is kept below 4 ppm by injection of nitrogen into all equipment open to the environment.

6. A concentrate according to any of the preceding claims 1, 2, 3 or 4 wherein said oxygen content is kept below 4 ppm by filling the hold tanks used in the process from the bottom (bottom fill).

7. A concentrate according to any of the preceding claims wherein said resulting concentrate in substantially free of 2,6 - Nonadienal and (E, Z) - 2,6 - Nonadienal, such that a beverage comprising 1 -10% melon juice derived from said melon juice concentrate does not have an organoleptically detectable cucumber flavour.
